# EUROPEAN PATENT APPLICATION

(11) **EP 2 505 781 A2**
(43) Date of publication of application: **03.10.2012**
(21) Application number: 12152342.7
(22) Date of filing: 24.01.2012
(51) Int. Cl.: F01D 5/08, F01D 11/02

(54) **Stator-rotor assemblies with features for enhanced containment of gas flow, and related processes**

(30) Priority: 31.03.2011 US 201113077812
(71) Applicant: General Electric Company, Schenectady, NY 12345 (US)
(72) Inventor: Ledezma, Gustavo Adolfo, Niskayuna, NY New York 12309 (US); Bourassa, Corey, Niskayuna, NY New York 12309 (US); Bunker, Ronald Scott, Niskayuna, NY New York 12309 (US); Laskowski, Gregory Michael, Niskayuna, NY New York 12309 (US)
(74) Representative: Cleary, Fidelma

(57) **Abstract**

A stator-rotor assembly is described, including at least one interface region and a gap between a surface of the stator and a surface of the rotor. The stator is a nozzle or vane that includes circumferential endwalls. Each endwall includes at least one leading edge and one trailing edge, relative to a hot gas flow path. A trailing edge of at least one of the endwalls includes a pattern of cavities that are capable of impeding the entry of hot gas into a wheelspace region that adjoins the gap between the stator and the rotor. The cavities can also be formed on various sections of the rotor. The stator-rotor assembly can be incorporated into various turbomachines, such as gas turbine engines. Related processes are also described.

## Description

### BACKGROUND OF THE INVENTION

This invention relates generally to improvements in turbomachines, such as turbine engines. More specifically, the invention is directed to methods and articles for decreasing the flow of gas (e.g., hot gas) into selected regions within the stator-rotor assemblies of gas turbines.

The typical design of most turbine engines is well-known in the art. They include a compressor for compressing air that is mixed with fuel. The fuel-air mixture is ignited in an attached combustor, to generate combustion gases. The hot, pressurized gases, which in modem engines can be in the range of about 1100 to 2000°C, are allowed to expand through a turbine nozzle, which directs the flow to turn an attached, high-pressure turbine. The turbine is usually coupled with a rotor shaft, to drive the compressor. The core gases then exit the high pressure turbine, providing energy downstream. The energy is in the form of additional rotational energy extracted by attached, lower pressure turbine stages, and/or in the form of thrust through an exhaust nozzle.

In the typical scenario, thermal energy produced within the combustor is converted into mechanical energy within the turbine, by impinging the hot combustion gases onto one or more bladed rotor assemblies. (Those versed in the art understand that the term "blades" is usually part of the lexicon for aviation turbines, while the term "buckets" is typically used when describing the same type of component for land-based turbines). The rotor assembly usually includes at least one row of circumferentially-spaced rotor blades. Each rotor blade includes an airfoil that includes a pressure side and a suction side. Each airfoil extends radially outward from a rotor blade platform. Each rotor blade also includes a dovetail that extends radially inward from a shank extending between the platform and the dovetail. The dovetail is used to mount the rotor blade within the rotor assembly to a rotor disk or spool.

The rotor forms part of a stator-rotor assembly. The rows of rotor blades on the rotor assembly and the rows of stator vanes on the stator assembly extend alternately across an axially oriented flowpath for "working" the combustion gases. The jets of hot combustion gas leaving the vanes of the stator element act upon the turbine blades, and cause the turbine wheel to rotate in a speed range of about 3000-15,000 rpm, depending on the type of engine. (Again, in terms of parallel terminology, the stator element, i.e., the element which remains stationary while the turbine rotates at high speed, can also be referred to in the art as the "nozzle assembly").

As depicted in the figures described below, the opening at the interface between the stator element and the blades or buckets can allow hot core gas to exit the hot gas path and enter the wheel-space of the turbine engine. In order to limit this leakage of hot gas, the blade structure typically includes axially projecting angel wing seals. According to a typical design, the angel wings cooperate with projecting segments or "discouragers" which extend from the adjacent stator element, i.e., the nozzle. The angel wings and the discouragers overlap (or nearly overlap), but do not touch each other, thus restricting gas flow.

A gap remains at the interface between adjacent regions of the nozzle and turbine blade, e.g., between the adjacent angel wing-discourager projections, when such a seal is used. The presence of the gap is understandable, i.e., the clearance necessary at the junction of stationary and rotating components. However, the gap still provides a path which can allow hot core gas to exit the hot gas path into the wheel-space area of the turbine engine.

The leakage of hot gas by this pathway is disadvantageous for a number of reasons. First, the loss of hot gas from the working gas stream causes a resultant loss in energy available from the turbine engine. Second, ingestion of the hot gas into turbine wheel-spaces and other cavities can damage components which are not designed for extended exposure to such temperatures, such as the nozzle structure support and the rotor wheel.

Attempts have been made in the past to minimize the leakage of hot gas from the working gas stream. These attempts have sometimes involved the use of coolant air, i.e., "purge air", as described in U.S. Patent 5,224,822 (Lenehan et al). In a typical design, the air can be diverted or "bled" from the compressor, and used as high-pressure cooling air for the turbine cooling circuit. Thus, the coolant air is part of a secondary flow circuit which can be directed generally through the wheel-space cavity and other inboard regions.

In one specific example, the coolant air can be vented to the rotor/stator interface. In this manner, the coolant air can function to maintain the temperature of certain engine components under an acceptable limit. Moreover, the coolant air can serve an additional, specific function when it is directed from the wheel-space region into one of the gaps described previously. This counter-flow of coolant air into the gap provides an additional barrier to the undesirable flow of hot gas out of the gap and into the wheel-space region.

While coolant air from the secondary flow circuit is very beneficial for the reasons discussed above, there are drawbacks associated with its use as well. For example, the extraction of air from the compressor for high pressure cooling and cavity purge air consumes work from the turbine, and can be quite costly in terms of engine performance. Moreover, in some engine configurations, the compressor system may fail to provide purge air at a sufficient pressure during at least some engine power settings. Thus, hot gases may still be ingested into the wheel-space cavity.

Another technique for minimizing the leakage of hot gas from the working gas stream of a gas turbine is described in U.S. Patent 6,481,959 (Morris et al). This patent describes the use of a supplemental air cooling system, to inhibit ingestion of hot gases into various circumferential regions of the turbine disc cavity, e.g., the gap and wheelspace regions. The system in Morris et al includes a number of ingestion inhibiting dynamic jet orifices, located on the underside of the trailing edges of a turbine nozzle.

While the concept described in Morris et al may be suitable in some situations, there are drawbacks associated with it as well. For example, the air cooling system may require a diversion of air from the compressor, and this can compromise engine performance, as alluded to previously. Moreover, it appears that the air jets used in the system must produce an airflow momentum greater than that of the hot gas moving into the gap and wheelspace, so as to inhibit such movement. Such a system would appear to require a complex design, especially if the amount of cooling air needs to be minimized.

In view of this discussion, it should be apparent that new, relatively simple techniques for reducing the leakage of hot gases from a hot gas flow path into undesirable regions within a turbine engine or other type of turbomachine would be welcome in the art. Moreover, reduction of the cooling and cavity purge-air flow which is typically required to reduce the hot gas leakage would itself have other important benefits. For example, higher core air flow would be possible, thereby increasing the energy available in the hot gas flow path.

Any innovations designed to accomplish these goals must still adhere to the primary design requirements for a gas turbine engine or other type of turbomachine. In general, overall engine efficiency and integrity must be maintained. Any change made to the engine, or to specific features within the engine, must not disturb or adversely affect the overall hot gas and coolant air flow fields. Moreover, the contemplated improvements should not involve manufacturing steps or changes in those steps which are time-consuming and uneconomical. Furthermore, the improvements should be adaptable to varying designs in engine construction, e.g., different types of stator-rotor assemblies.

### BRIEF DESCRIPTION OF THE INVENTION

The invention is directed to a stator-rotor assembly, comprising at least one circumferential endwall having a trailing edge that comprises a pattern of cavities. Preferably, the stator-rotor assembly comprises at least one interface region between a surface of the stator and a surface of the rotor. The surfaces are separated by a gap. The stator is a nozzle or vane that comprises inner and outer circumferential endwalls; and each endwall includes at least one leading edge and one trailing edge, relative to a hot gas flow path. A trailing edge of the inner circumferential endwall comprises a pattern of cavities that are capable of impeding the entry of hot gas into a wheelspace region that adjoins the gap between the stator and the rotor.

The invention also resides in a turbomachine comprising at least one stator-rotor assembly, as described above.

Further, the invention resides in a method for restricting the flow of hot gas through a gap between a stator and a rotor in a turbomachine. As described herein, the stator is a nozzle or vane that comprises inner and outer circumferential endwalls; and each endwall includes at least one leading edge and one trailing edge, relative to a gas flow path. The method comprises the step of forming a pattern of cavities on at least a portion of the trailing edge of the inner endwall of the stator component. The cavities have a shape and size sufficient to impede the entry of hot gas into a wheelspace area that adjoins the gap between the stator and rotor.

### BRIEF DESCRIPTION OF THE DRAWINGS

Embodiments of the present invention will now be described, by way of example only, with reference to the accompanying drawings in which:
FIG. 1 is a schematic illustration of a cross-section of a portion of a gas turbine.
FIG. 2 is an enlarged view of the cross-sectional turbine portion of FIG. 1.
FIG. 3 is another enlarged view of the cross-sectional turbine portion of FIG. 1.
FIG. 4 is a perspective of the endwall region of one section of a stator-rotor assembly, according to the prior art.
FIG. 5 is another perspective of the endwall region of a section of a stator-rotor assembly, according to embodiments of this invention.
FIG. 6 is a partial, side-elevation view of an endwall surface which includes a cavity.
FIG. 7 is a top-view perspective of a cavity within an endwall surface.
FIG. 8 is another partial, side-elevational view of an endwall surface which includes a cavity.
FIG. 9 is another top-view perspective of a cavity within an endwall surface, according to some embodiments of the invention.
FIG. 10 is a top-view perspective of a cavity within an endwall surface, according to other embodiments of the invention.
FIG. 11 is a top-view perspective of a cavity within an endwall surface, according to additional embodiments of the invention.
FIG. 12 is a perspective of a modified endwall region of one section of a stator-rotor assembly, according to some embodiments of the invention.
FIG. 13 is another perspective of a modified endwall region, according to inventive embodiments.
FIG. 14 is a depiction of a computer-assisted model for numerical predictions of hot gas flow, purge flow, and flow interactions, in a region of a stator-rotor assembly.

### DETAILED DESCRIPTION OF THE INVENTION

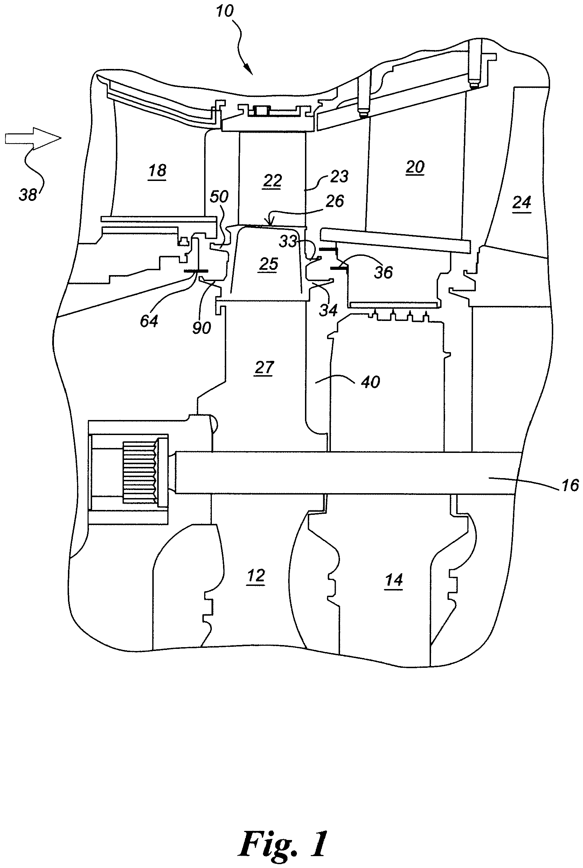

FIG. 1 is a schematic illustration of a section of a gas turbine engine, generally designated with numeral 10. The engine includes axially-spaced rotor wheels 12 and spacers 14, joined to each other by a plurality of circumferentially spaced, axially extending bolts 16. The turbine includes various stages having nozzles, for example, first-stage nozzle 18 and second-stage nozzle 20, comprised of a plurality of circumferentially spaced stator blades. Between the nozzles and rotating with the rotor are a plurality of rotor blades or buckets, the first and second-stage rotor blades 22 and 24, respectively, being illustrated.

Each rotor blade, e.g., blade 22, includes an airfoil 23 mounted on a shank 25, which includes a platform 26. (Some of the other detailed features of the rotor blades are not specifically illustrated here, but can be found in various sources, e.g., U.S. Patent 6,506,016 (Wang), which is incorporated herein by reference). Shank 25 includes a dovetail 27, for connection with corresponding dovetail slots formed on rotor wheel 12.

Blade or bucket 22 includes axially projecting angel wings 33, 34, 50 and 90 (sometimes called "angel wing seals"), as depicted in FIG. 1. The angel wings are typically integrally cast with the blade. As described previously, they are generally in opposing position to "lands" or discouragers 36 and 64, which protrude from the adjacent nozzles 20 and 18, respectively. As one example, discourager 64 is shown in an opposing, overlapping position, relative to angel wing 90. The hot gas path in a turbine of this type is generally indicated by arrow 38. It should be understood that surfaces and other features described in these figures are sometimes referenced in terms of the direction of hot gas flow. For example, the "leading" edge of a feature usually refers to the region that comes into initial contact with the hot gas, while the "trailing" edge refers to a downstream region.

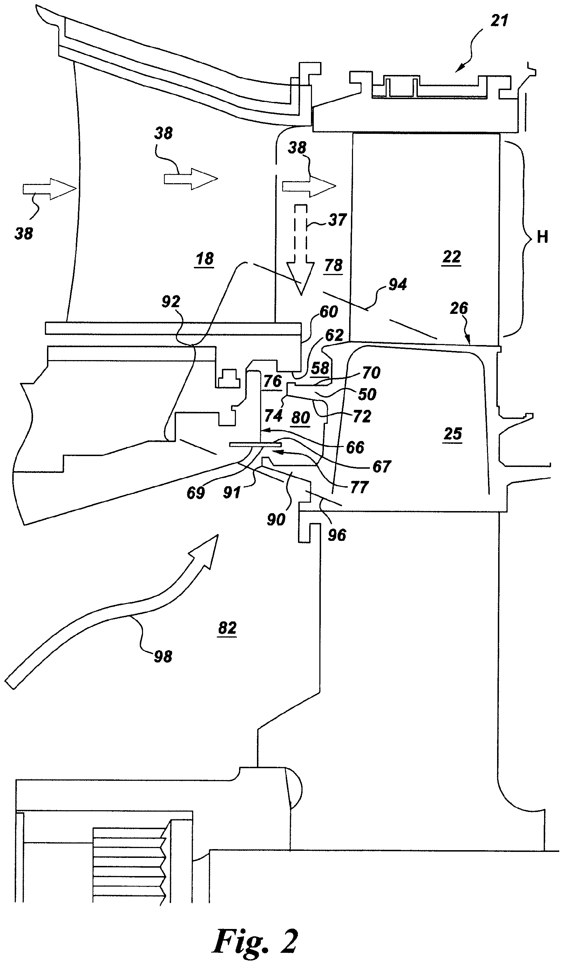

FIG. 2 is an enlarged view of a portion of the engine depicted in FIG. 1, with emphasis on the general region featuring first stage nozzle (stator) 18 and first stage rotor blade 22. (The region can be referred to as the "stator-rotor assembly", designated as element 21 in the figure). Nozzle 18 includes discourager 58, and radial face 60, along with lower discourager face 62.

It is evident from FIG. 2 that some of the portions of nozzle 18 and blade 22 face each other in an interface region 92. The facing surfaces are separated by at least one gap (two gaps are shown here, as described below). Thus, upper gap 76 generally lies between lower discourager face 62 and angel wing tip 74. Lower gap 77 generally lies between lower surface 69 of discourager 64 and the tip 91 of angel wing 90. In this instance, gaps 76 and 77 generally define buffer cavity 80, and provide a pathway between axial gap 78 and the "inboard" regions of the turbine engine, e.g., wheel-space region 82.

The term "interface region" is used herein to describe the general area of restricted dimension which includes gaps 76 and 77, along with the surrounding portions of nozzle 18 and blade 22. For the purpose of general illustration, interface region 92 in FIG. 2 is shown as being bounded by dashed boundary lines 94 and 96. The precise boundary for the interface region will vary in part with the particular design of the stator-rotor assembly. One exemplary manner in which to defme a typical interface region would depend on the length (viewed as "height" in FIG. 2) of rotor blade 22. Thus, if the height of blade 22 within hot gas path 38 is designated as "H", the interface region (upper boundary line 94) can be estimated as extending from platform 26 up to about 10% of height H. In terms of the "inboard" region of the stator-rotor assembly (i.e., for lower boundary line 96), the interface region can be estimated to extend that same length (about 10% of H) below the lowest portion of the most inboard discourager, i.e., lower angel wing 90. (Boundary line 96 would thus also always extend across wheel space region 82 to include the lowest discourager on the stator, i.e., discourager 64 in FIG. 2). The interface region can often be referred to as a "flow-restriction" region.

In accordance with normal engine operation, combustion gas being directed into the engine along hot gas path 38 flows aftward through stator-rotor assembly 21, continuing through other stator-rotor assemblies in the engine. (Technically, the combustion gas should be referred to as "post-combustion" at this stage. Moreover, it should be understood that the "hot gas" is often a mixture of gases. While the mixture is usually dominated by post-combustion gases, it may also include various coolant injections and coolant flow, e.g. from nozzle 18 and/or from coolant air stream 98, discussed below). As the hot gas stream enters axial gap 78, a portion of the gas stream (dashed arrow 37) may escape through upper gap 76 and flow into buffer cavity 80. (In some extreme situations which would be very unusual, the hot gas could continue to move through lower gap 77 and enter wheel-space region 82). As mentioned above, coolant air, indicated by arrow 98, is usually bled from the compressor (not shown), and directed from the inboard region of the engine (e.g., wheel-space 82) into buffer cavity 80, to counteract the leakage of hot gas. The deficiencies which sometimes are present in such a gas flowpath system were described previously.

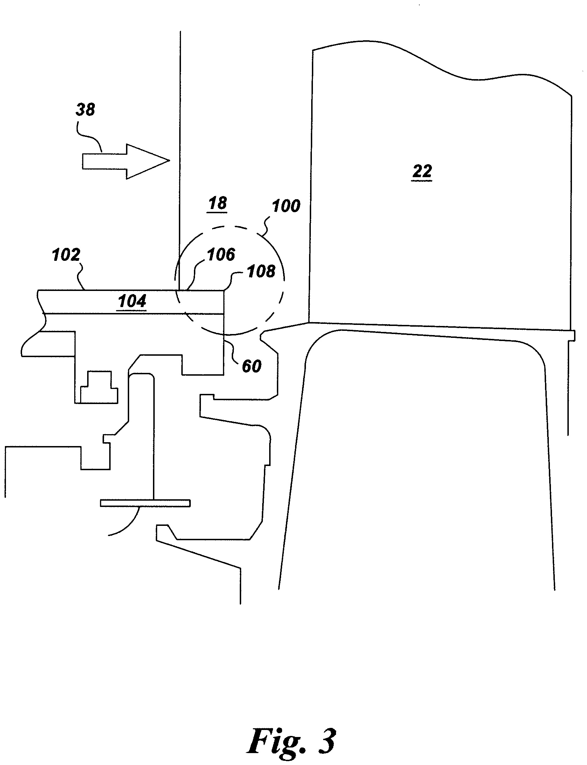

FIG. 3 is an enlarged view of the endwall region 100, featured in FIGS. 1 and 2. Surface 102 can be considered a "platform" of first stage nozzle 18, but is referenced herein as the top surface of inner circumferential endwall 104. The trailing edge portion 106 of surface 102 usually terminates and forms a relatively sharp, trailing edge 108 with radial face 60, as shown in the figure. (As those skilled in the art understand, this region may be provided with one or more protective coatings).

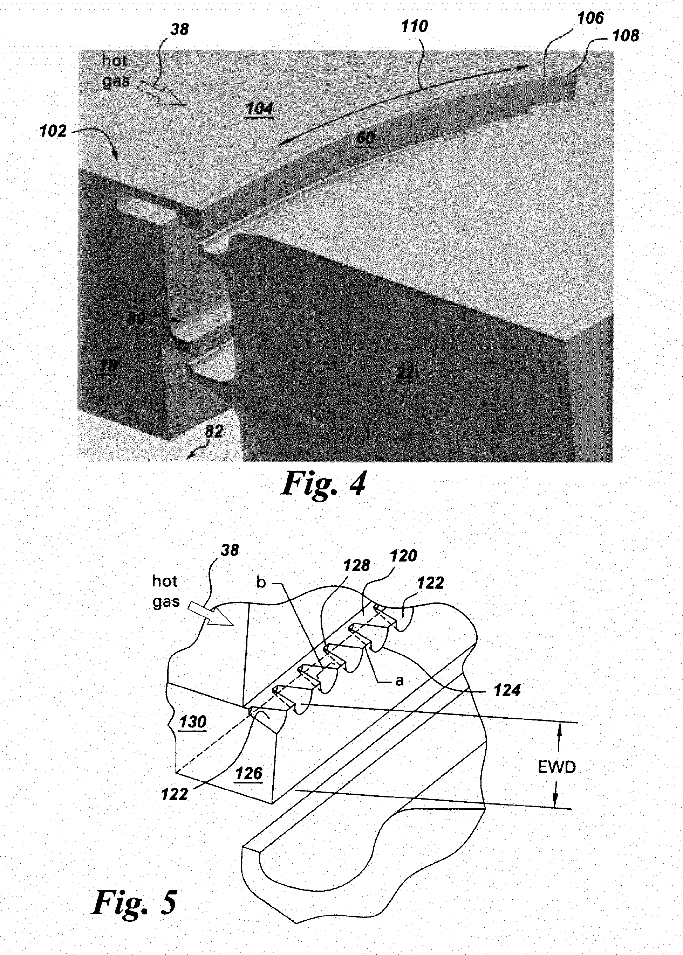

FIG. 4 is another view of an endwall region very similar to that shown in FIG. 3, and representing a portion of a conventional stator-rotor assembly. FIG. 4 is taken from a perspective that depicts the upper surface region 102 and 106 of endwall 104. The figure also depicts the relatively sharp, trailing edge 108, formed by the junction of surface 106 and radial face 60, extending along a width dimension 110 of nozzle 18. It appears that this sharp trailing edge promotes the formation of a shear layer, resulting from the interaction of high-speed flow in the hot gas path with relatively low-speed flow in the wheelspace. The shear layer can be unstable, leading to large flow oscillations into and out of the wheelspace region. (It should be understood that, in some embodiments of this invention, the cavities may also be placed on the circumferential endwall(s) of rotating components, e.g., in a location that is also sometimes referred to as the "blade platform". These components may also be considered to be part of the stator-rotor assemblies in turbomachines).

With continuing reference to FIG. 4 (and FIG. 5, discussed below), at least a portion of the trailing edge 108 is provided with a pattern of cavities. The cavities are capable of impeding the entry of hot gas into the wheelspace region 82 that adjoins the gap between the stator 18 and the rotor blade 22. Although the inventors do not wish to be bound by any particular theory for this phenomenon, it appears that the modified edge surface resulting from the presence of the cavities inhibits shear layer instability that would otherwise form above the trench cavity, aft of endwall 104 (FIG. 4). In this manner, it appears that the large flow oscillations can be broken up into smaller (and weaker) shear layers that have less of an influence on the gas flow into the wheelspace region. The inhibition of such instability appears to be especially significant in this particular region, where the flow of hot gas at high speeds over the endwall occurs at a relatively high angle, rather than occurring orthogonal to the gap 76.

As used herein, the term "cavity" is meant to embrace a variety of depressions, indentations, channels, grooves, dimples, pits, or any other type of discrete sinkhole. In some preferred embodiments, each cavity has a curved inner surface. As described below, the cavity may have a depth that is tapered along at least one dimension.

FIG. 5 depicts a trailing edge 120, similar to that of edge portion 106 in FIG. 4. Trailing edge 120 includes a pattern of cavities 122 within endwall surface 130, each in the shape of a partial cone. The depth and degree-of-curvature of each cone (which may also be characterized as a "groove") can vary significantly, as discussed below. In some preferred embodiments, the depth of cavity 122 is tapered. For example, the tapering can extend from a relatively wide opening 124, at the trailing or "aft" section of endwall 126, closest to the gap, to a relatively narrow top portion 128, that is usually flush with surface 130. The top portion is upstream of opening 124 (relative to gas flow 38), and extends farther along the surface 130 of endwall 126. The cavities are usually (though not always) parallel to each other, relative to the length-dimension discussed below. Moreover, in most embodiments, the cavities can be thought of as elongate, relative to the direction of hot gas flow.

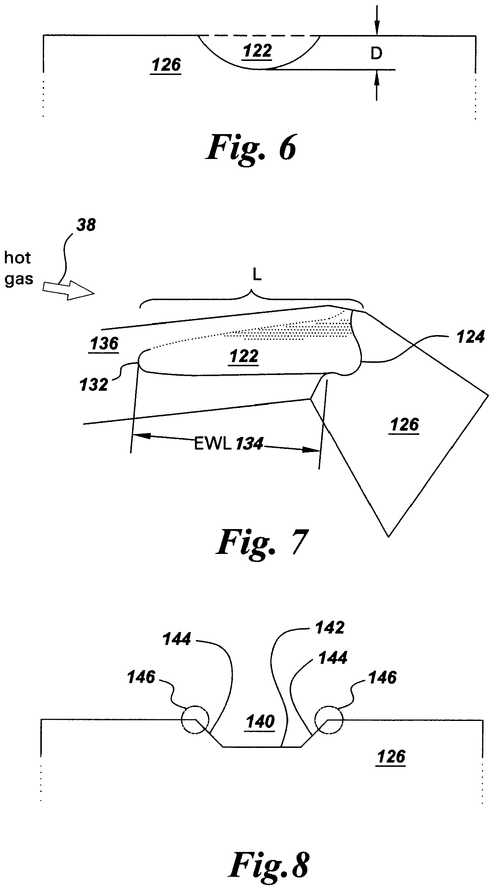

FIG. 6 is a cross-sectional illustration of one of the cavities 122 (FIG. 5), but is meant to provide guidance regarding the possible depth for a variety of cavities of different shapes. In FIG. 6, the depth "D" represents the depth of the cavity within endwall 126. The depth can vary considerably, Factors which are relevant to selection of optimum depth include the type and speed of gas flow over the cavities (in one or more streams); the degree to which gas flow should be restricted or otherwise disrupted; the shape and size of the stator and/or rotor surfaces on which the cavities are located; the manner in which the cavities are to be formed; and the size of the local stator-rotor gap region. Typically (though not always), the absolute depth of the cavity will be greater for nozzles/stators in a land-based turbine, as compared to those in an aviation turbine.

The cavity depth D is usually in the range of about 10% to about 80% of the endwall depth ("EWD") shown in FIG. 5. In some preferred embodiments, the depth is about 20% to about 50% of the endwall depth, while in other preferred embodiments, the depth is about 30% to about 70% of the endwall depth ("EWD"). The width of the cavity, at its widest dimension, is usually about 50% to about 200% of its depth; and in some instances, about 100% to about 150% of its depth.

In some instances, a typical range of cavity depth for a land-based turbine would be in the range of about 1 mm to about 3 mm. In the case of an aviation turbine, the range may usually be in the range of about 0.2 mm to about 1 mm. Those skilled in the art will be able to select the most appropriate cavity depth for a given situation, based on the factors mentioned above, as well as fluid flow studies, discharge coefficient tests, computational fluid dynamics predictions, and the like. A typical range for cavity width is about 1 mm to about 10 mm.

FIG. 7 represents another perspective of cavity 122, along a plane generally aligned with the path of hot gas 38. The figure is meant to provide guidance, regarding the desired length "L" of the cavity, extending from cavity opening 124 to the "upstream" end 132 of the cavity. In general, the cavity will have a length that is in the range of about 50% to about 200% of endwall length ("EWL") 134, as shown in the figure. In some specific embodiments, the length will be about 25% to about 100% of the endwall length. In some instances, a length for the cavity will be about 5 mm to about 20 mm, in the case of a land-based turbine; and about 2.5 mm to about 10 mm, in the case of an aviation turbine. Those skilled in the art will be able to select the most appropriate length for the cavity, based on the factors noted above for cavity depth. Usually, the upstream end 132 of the cavity is flush with endwall surface 136.

As mentioned above, the cavities may be present in a variety of shapes, as shown, for example, in FIG. 8. The figure is a cross-sectional view similar to that of FIG. 6. In FIG. 8, cavity 140 has a relatively flat bottom surface 142. The sidewalls 144 can be slanted, as shown, and the slanting angle can vary as well. (The depth of the cavity can also vary, as in the embodiment of FIG. 6). Furthermore, surface edges 146, shown as being relatively sharp, could alternatively be somewhat rounded. The factors noted above will influence the particular shape.

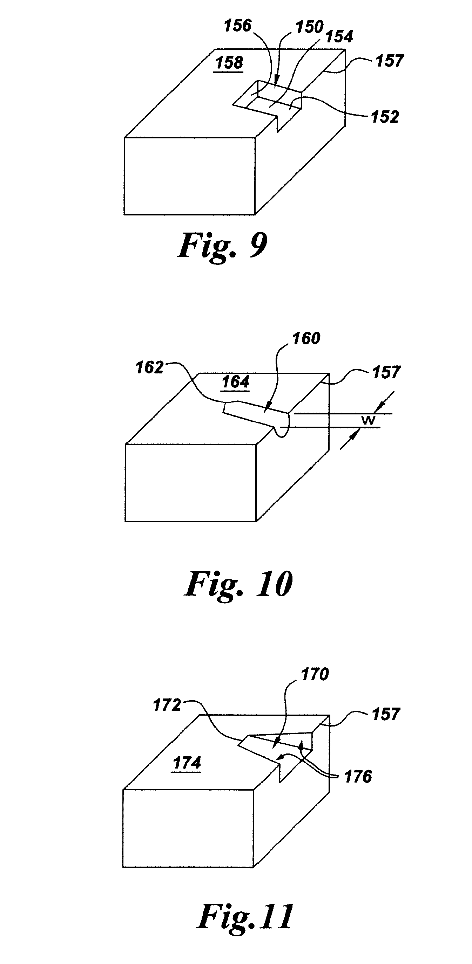

Additional, non-limiting examples of cavity shapes can be provided. For example, FIG. 9 depicts a cavity 150, in which the interior region 152 can generally be in the shape of a square or rectangle. Alternatively, the interior region can be "bowl"-shaped, with a curved bottom surface 154. In each instance, the cavity terminates at a wall 156, which may be slanted or perpendicular. In other words, the cavity's depth does not decrease (extending from edge 157) to a point flush with endwall surface 158, as in other embodiments.

The cavity 160 depicted in FIG. 10 can be in the shape of a circular groove. As in the other embodiments, the depth, length, and width of the cavity can vary considerably. Moreover, interior end portion 162 can taper up to surface 164; or can terminate in a wall, as in FIG. 9. The end portion is shown as being triangle-shaped, but other shapes are possible as well. In some preferred embodiments for this shape, the width "w" remains constant, back to end portion 162. (This is in contrast to the conical shape depicted in FIG. 5, wherein the width may progressively narrow, away from the endwall edge).

The cavity 170 depicted in FIG. 11 can have a substantially-square, "diffuser" shape, with an end portion 172 flush with surface 174. The interior side surfaces 176 of the cavity can be in the form of corner fillets, as shown in the figure. Again; the overall dimensions can vary, as in the other embodiments.

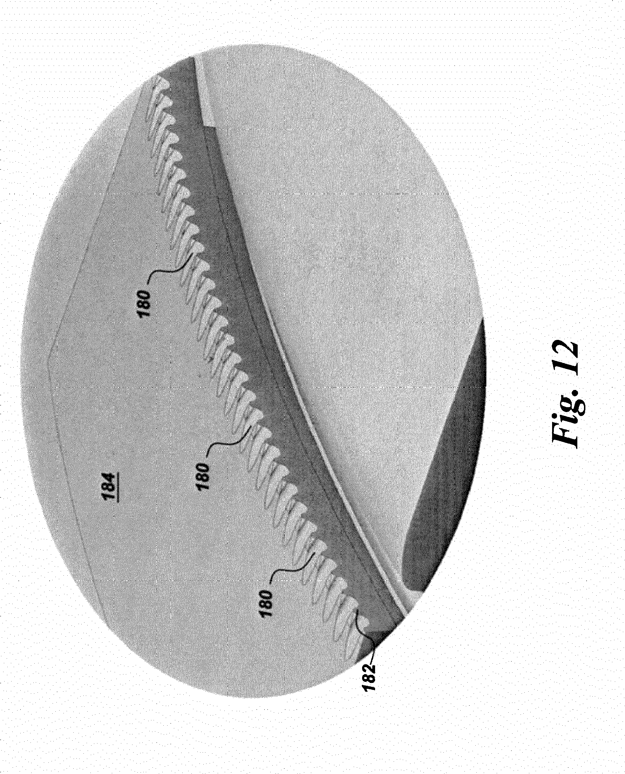

In terms of cavity location, reference can be made to FIG. 4, wherein the cavities have not yet been incorporated. For embodiments of the present invention, the cavities could be incorporated along the entire circumferential length 110 of the trailing edge. Alternatively, the cavities may be incorporated into only a portion of the edge, or in selected regions along the edge. The most appropriate arrangement of cavities can be determined without undue effort, experimentally and/or by modeling. Factors and techniques set forth above, such as flow coefficient tests, will provide guidance in this respect. FIG. 12 provides an illustration of a pattern of one type of cavities 180, incorporated along the entire dimension of the trailing edge 182 of an endwall 184.

Moreover, the cavities may be in contact with each other, e.g., where the edge of each cavity is in contact with an edge of an adjacent cavity. Alternatively, the cavities may be spaced from each other, depending on their shape, as well as the other factors noted herein. The degree of spacing may thus vary according to many of those same factors, including, of course, the shape of the cavity. As a non-limiting illustration with reference to FIG. 5, the spacing "a" between cavities may have a length that is about 10% to about 100% of the width "b" of a typical cavity. The cavity spacing may be uniform or nonuniform.

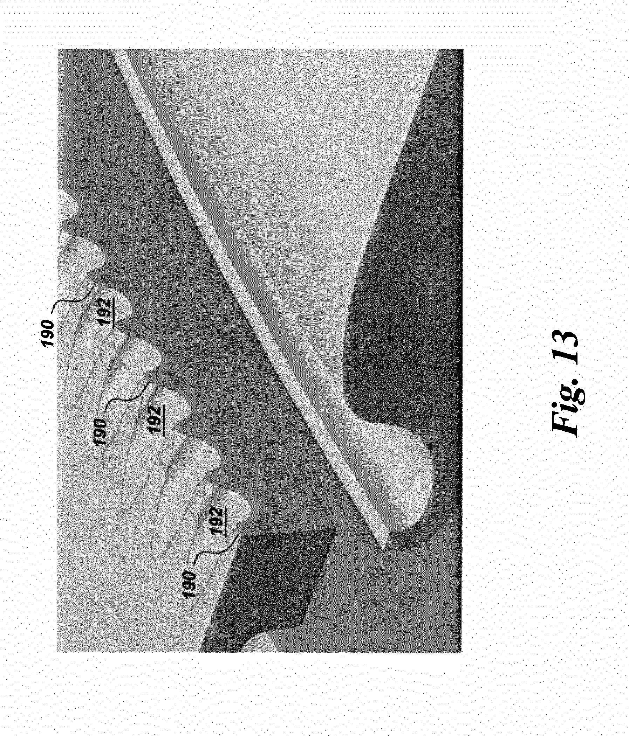

Moreover, the actual border region between cavities need not be a relatively flat ridge, i.e., resulting in a very discrete border between each cavity. Reference is made to FIG. 13, which is an enlarged view of the cavities depicted in FIG. 12. In this embodiment, the sidewall 190 between each cavity 192 (i.e., at or near the trailing edge) blends into the sidewall of an adjacent cavity. This "continuous" feature may be advantageous in certain embodiments, as compared to the more discrete cavity-boundary depicted in FIG. 5.

While many of the primary embodiments are directed to the use of cavities for endwall sections on stationary portions of the stator-rotor assembly, the cavities may also be employed on some of the rotating components. Various types of rotors may be modified in this manner, e.g., unshrouded rotors; and those that have an attached shroud. In each instance, the cavities, as described previously, can be very useful for modifying the inner endwalls of such components.

Another embodiment of the present invention is directed to a turbomachine, which includes at least one stator-rotor assembly, such as those described above. Gas turbine engines (e.g., turbojets, turboprops, land-based power generating turbines, and marine propulsion turbine engines), represent examples of a turbomachine. Other types are known in the art as well. Non-limiting examples include a wide variety of pumps and compressors, which also happen to incorporate a stator-rotor assembly through which fluids (gas or liquid) flow. In many of these other turbomachine designs, new techniques for reducing the leakage of fluid from a flow path into other regions of the machine would be of considerable interest. Thus, the stator-rotor assemblies in any of these turbomachines could include patterns of cavities as described in this disclosure.

Still another embodiment of this invention is directed to a method for restricting the flow of gas (e.g., hot gas) through a gap between a stator and rotor in a turbomachine. The method includes the step of forming a pattern of cavities on at least a portion of the trailing edge of the inner endwall of the stator component. (The stator can be either a nozzle or vane, depending on the intended use of the stator-rotor assembly). The cavities have a shape and size sufficient to impede the entry of hot gas into a wheelspace area that adjoins the gap between the stator and rotor. (Those familiar with various types of turbomachines understand that a large number of stator-rotor assemblies are typically present, and each may include the modified endwalls described herein). The method can also be used to form cavities on selected regions of a rotating component in the assembly.

The cavities can be formed by a variety of methods. Non-limiting examples include machining methods, such as various milling techniques. Other machining processes which are possible include electro-discharge machining (EDM) and electro-chemical machining (ECM). In some cases, the cavities could be formed during casting of the particular component, e.g., the investment-casting of a turbine rotor or nozzle. As one example, an investment mold surface could be provided with a selected pattern of positive features, e.g., "mounds", domes, pyramids, pins, or any other type of protrusions or turbulation. (Some of the methods for providing these features to various surfaces are described in U.S. Patent Application 10/841,366 (R. Bunker et al; issued as U.S. Patent 7,302,990), which is incorporated herein by reference). The shape of the positive features would be determined by the desired shape of the cavities, which would be inverse to the positive feature. Thus, after removal of the mold, the part would include the selected pattern of cavities. Those skilled in the art will be able to readily determine the most appropriate technique (or combination of techniques) for forming the cavities on a given surface.

### EXAMPLES

Computer models were generated to simulate the interaction between a hot gas flow path and a coolant purge flow. The models were based on the wheelspace cavity region of a stator-rotor assembly, for upstream vanes. (This region is similar to the general region in FIG 2 that is collectively indicated by wheel-space region 82, buffer cavity 80, upper gap 76, and axial gap 78). The computer models were based in part on a transient stator-rotor sliding mesh simulation on a periodic domain, using an unsteady Reynolds Averaged Navier-Stokes (URANS) turbulence model.

The hot gas flow path was traced, using a passive scalar. The passive scalar simulated a tracing gas seeded at the flow path inlet. A scalar concentration "C = 1" represented 100% hot gas; while "C = 0" represented 100% coolant purge flow.

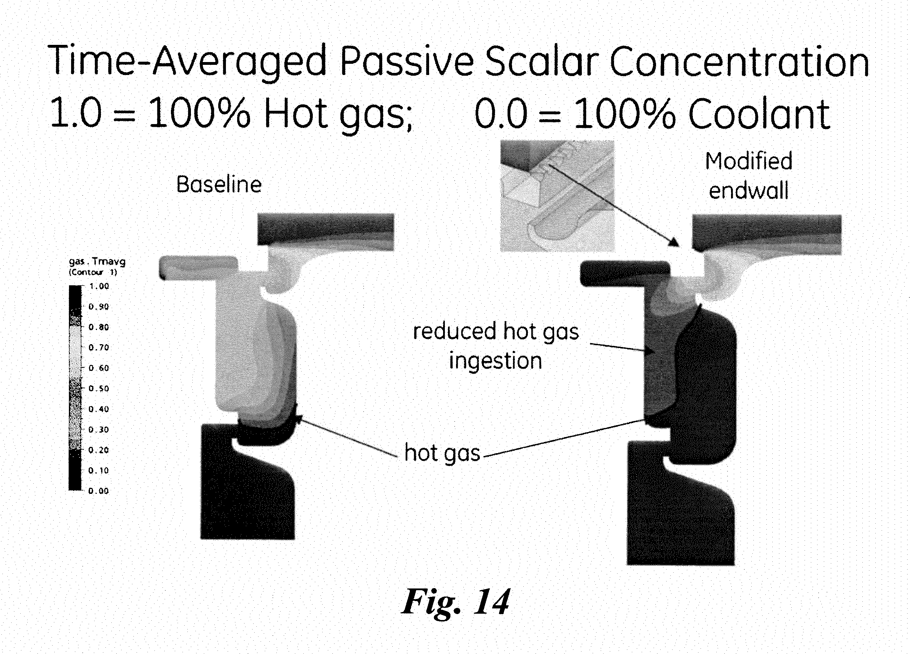

FIG. 14 is a depiction of the computer-assisted model for numerical predictions of hot gas flow, purge flow, and flow interactions, in the selected region of a stator-rotor assembly.

The "baseline" illustration on the left represents a stator-rotor endwall that has not been modified. The illustration on the right represents the modified endwall according to embodiments of this invention, having a series of uniformly-spaced cavities similar to those depicted in FIG. 5.

With continuing reference to FIG. 14, the lighter, gray-scaled contour levels in the buffer cavity represent high levels of hot gas. The boundary between the lighter-gray contours and the solid black region provides an illustration of how a significantly-smaller region inside the buffer cavity is exposed to hot gases, when the modified endwall is employed, as compared to the situation with no modification. The data for each figure are based on a constant amount of cavity purge flow. The data show that the level of hot gas ingress into the buffer cavity decreases significantly when the endwall is modified, as shown by the scalar concentration levels in the two illustrations of FIG. 14.

This invention has been described by way of specific embodiments and examples. However, it should be understood that various modifications, adaptations, and alternatives may occur to one skilled in the art, without departing from the spirit and scope of the claimed inventive concept. All of the patents, articles, and texts mentioned above are incorporated herein by reference.

## Claims

1. A stator-rotor assembly (21), comprising at least one circumferential endwall (104,126) having a trailing edge (108,120) that comprises a pattern of cavities (122).

2. The assembly of claim 1, further comprising at least one interface region (92) between a surface of the stator and a surface of the rotor (22), said surfaces being separated by a gap (76,77),
wherein the stator is a nozzle or vane (18,20) or the rotor (22) is a bucket or blade, the nozzle or vane, or the bucket or blade comprising inner and outer circumferential endwalls (104,120); and each endwall further including at least one leading edge and a trailing edge (108,120), relative to a hot gas flow path; and
wherein the trailing edge (108,120) of the inner circumferential endwall (104,120) comprises the pattern of cavities (122) that are capable of impeding the entry of hot gas into a wheelspace region (82) that adjoins the gap (76,77) between the stator (18) and the rotor (22).

3. The assembly of claim 2, wherein the cavities (122) have a curved inner surface.

4. The assembly of claim 2 or 3, wherein the cavities (122) have a depth that is tapered along at least one dimension of the cavity (122).

5. The assembly of claim 2, 3, or 4, wherein the cavities (122) are in the shape of a partial cone.

6. The assembly of claim 5, wherein each partial cone has a base dimension (124), closest to the gap, that is wider than an opposite end of the cone (128) that is farthest from the gap (76,77).

7. The assembly of any of claims 2 to 6, wherein the pattern comprises one of an array of uniformly-spaced cavities (122) or an array of non-uniformly-spaced cavities (122).

8. The assembly of any of claims 2 to 7, wherein the cavities (122) have an average depth in the range of about 10% to about 80% of the depth of the inner circumferential endwall (104,120).

9. The assembly of any of claims 2 to 8, wherein the cavities (122) are situated along the trailing edge (108,120), and are generally parallel to each other.

10. The assembly of claim 9, wherein an edge of each cavity (150,160,170,180) is in contact with an edge of an adjacent cavity.

11. The assembly of claim 9, wherein each cavity is spaced (150,160,170,180) from adjacent cavities.

12. The assembly of any of claims 2 to 11, wherein the interface region (92) between the stator and rotor surfaces is a flow-restriction region that limits the flow of gas from the hot flow path of the turbine engine (10), through the gap (76), to a wheel-space region (82) of the stator-rotor assembly (21).

13. A gas turbine engine, comprising a stator-rotor assembly (21) according to any preceding claim.

14. A turbomachine, comprising the stator-rotor assembly of any of claims 1 to 12.

15. A method for restricting the flow of hot gas through a gap between a stator and a rotor in a turbomachine,
wherein the stator (18) is a nozzle or vane that comprises inner and outer circumferential endwalls (104,120); and each endwall includes at least one leading edge and one trailing edge (108), relative to a gas flow path; and
wherein the method comprises the step of forming a pattern of cavities (122) on at least a portion of the trailing edge (108) of the inner endwall (104) of the stator component (18);
wherein the cavities (122) have a shape and size sufficient to impede the entry of hot gas into a wheelspace area that adjoins the gap between the stator (18) and rotor (22).
